# EUROPEAN PATENT APPLICATION

(11) **EP 4 567 992 A1**
(43) Date of publication of application: **11.06.2025**
(21) Application number: 24839968.5
(22) Date of filing: 02.07.2024
(51) Int. Cl.: H01M 50/291, H01M 50/204

(54) **BATTERY PACK**

(30) Priority: 07.07.2023 KR 20230088283
(71) Applicant: LG Energy Solution, Ltd., Seoul 07335 (KR)
(72) Inventor: JANG, Byung Do, Daejeon 34122 (KR)
(74) Representative: Plasseraud IP
(86) International application number: PCT/KR2024/009282
(87) International publication number: WO 2025/014155

(57) **Abstract**

Example embodiments provide a battery pack. The battery pack includes a base plate, first and second battery cell assemblies on a mounting surface of the base plate, and a cross beam between the first battery cell assembly and the second battery cell assembly, in which first and second side surfaces of the cross beam are oblique to the mounting surface of the base plate, the first side surface of the cross beam faces the first battery cell assembly, and the second side surface of the cross beam faces the second battery cell assembly.

## Description

### [Technical Field]

The present invention relates to a battery pack. The present application claims the benefit of priority based on Korean Patent Application No. 10-2023-0088283, filed on July 7, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

To meet rapidly expanding demand for secondary batteries for mobility, cell makers are paying enormous capital expenditures. Secondary batteries to be manufactured by an efficient secondary battery manufacturing process and assembled in a convenient way may contribute to improvement in production capacity per manufacturing line. Accordingly, various studies are being conducted to improve process efficiency of secondary battery manufacturing and assemblability of battery packs.

### [Disclosure]

### [Technical Problem]

The present invention is directed to providing a battery pack with improved productivity.

### [Technical Solution]

Example embodiments of the present invention provide a battery pack. The battery pack includes a base plate, a first battery cell assembly on a mounting surface of the base plate and including a plurality of first battery cells and a first side beam coupled to the plurality of first battery cells, a second battery cell assembly on the mounting surface of the base plate and including a plurality of second battery cells and a second side beam coupled to the plurality of second battery cells, and a cross beam between the first battery cell assembly and the second battery cell assembly, in which first and second side surfaces of the cross beam are oblique to the mounting surface of the base plate, the first side surface of the cross beam faces the first battery cell assembly, and the second side surface of the cross beam faces the second battery cell assembly.

The first side beam may include a first inclined surface facing the first side surface of the cross beam, and the second side beam may include a second inclined surface facing the second side surface of the cross beam.

The first side beam may include a first horizontal surface parallel to the mounting surface of the base plate and connected to the first inclined surface, and the second side beam may include a second horizontal surface parallel to the mounting surface of the base plate and connected to the second inclined surface.

The first side beam may include a first vertical surface vertical to the mounting surface of the base plate and connected to the first horizontal surface, and the second side beam may include a second vertical surface vertical to the mounting surface of the base plate and connected to the second horizontal surface.

Each of the first and second horizontal surfaces may overlap an upper surface of the cross beam, the upper surface of the cross beam may be connected to the first and second side surfaces, and the first and second vertical surfaces may face each other.

The cross beam may include a lower surface in contact with the mounting surface of the base plate, and each of the first and second side surfaces of the cross beam may be connected to the lower surface of the cross beam.

A length of the upper surface of the cross beam in a first direction may be different from a length of the lower surface of the cross beam in the first direction, and the first direction may be parallel to the mounting surface of the base plate.

The length of the upper surface of the cross beam in the first direction may be less than the length of the lower surface of the cross beam in the first direction.

The first and second sides may be spaced apart from each other in a first direction parallel to the mounting surface of the base plate, and the plurality of first battery cells may be arranged along the first direction.

A cross section of the cross beam may have a trapezoidal shape.

Example embodiments of the present invention provide a battery pack. The battery pack includes a base plate, a plurality of battery cell assemblies on a mounting surface of the base plate and each including a plurality of first battery cells and first and second side beams, and cross beams between the plurality of battery cell assemblies, in which a cross section of each of the cross beams may have a trapezoidal shape.

Each of the cross beams may include a lower surface in contact with the mounting surface of the base plate, and each of first and second side surfaces of each of the cross beams is oblique to the mounting surface of the base plate and connected to the lower surface of each of the cross beams.

A length of an upper surface of each of the cross beams in a first direction may be different from a length of the lower surface of each of the cross beams in the first direction, and the first direction may be parallel to the mounting surface of the base plate.

The length of the upper surface of each of the cross beams in the first direction may be less than the length of the lower surface of each of the cross beams in the first direction.

### [Advantageous Effects]

A battery pack according to example embodiments of the present invention includes cross beams provided in a housing and having inclined surfaces, and battery cell assemblies including a side beam having a shape complementary to the cross beams. Accordingly, the assemblability of the battery cell assemblies can be improved and easily disassembled even when battery cells swell.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a top view of a battery pack according to example embodiments.
FIG. 2 is a cross-sectional view taken along line II-II' of FIG. 1 according to example embodiments.
FIG. 3 is a top view of a battery pack according to example embodiments.
FIG. 4 is a cross-sectional view taken along line 3I-3I' of FIG. 3 according to example embodiments.
FIG. 5 is a top view of a battery pack according to example embodiments.
FIG. 6 is a cross-sectional view taken along line 5I-5I' of FIG. 5 according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

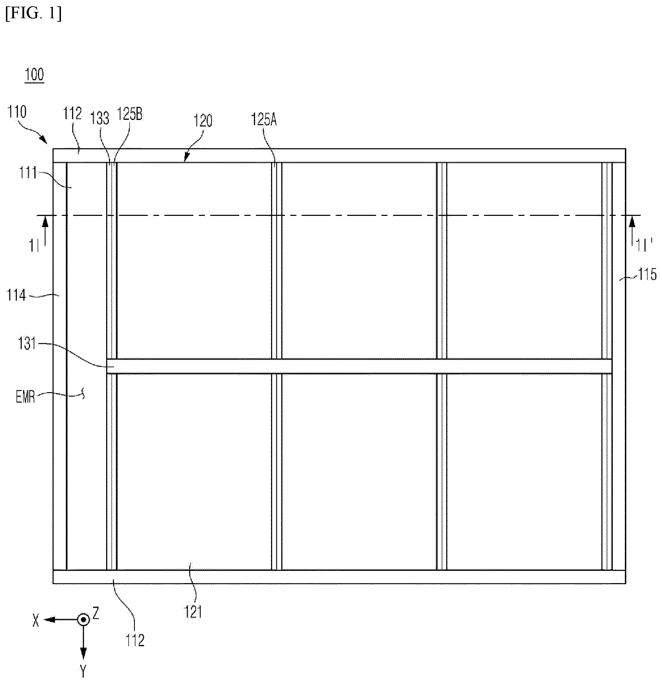

FIG. 1 is a top view of a battery pack 100 according to example embodiments. In FIG. 1, a lid plate 140 is omitted.

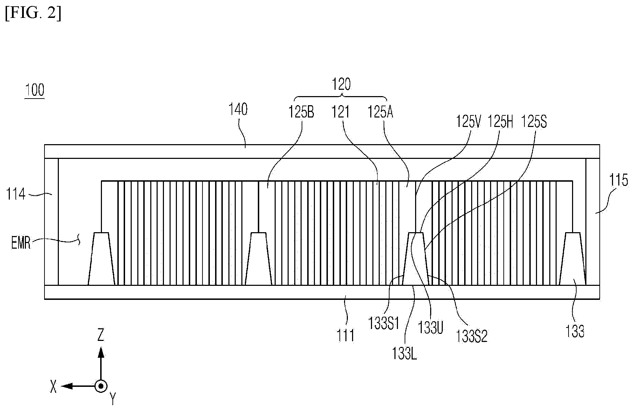

FIG. 2 is a cross-sectional view taken along line 1I-1I' of FIG. 1.

Referring to FIGS. 1 and 2, the battery pack 100 may include a housing 110, a plurality of battery cell assemblies 120, a center beam 131, cross beams 133, and the lid plate 140.

The housing 110 may provide a space for mounting the plurality of battery cell assemblies 120 therein. The housing 110 may include a base plate 111 and side walls 112, 113, 114, and 115.

Two directions substantially parallel to a mounting surface 111U of the base plate 111 are defined as an X-axis direction and a Y-axis direction, and a direction substantially perpendicular to the mounting surface 111U of the base plate 111 is defined as a Z-axis direction. The X-axis direction, the Y-axis direction, and the Z-axis direction may be substantially perpendicular to one another. Unless otherwise mentioned, the definition of the directions will apply to the following drawings.

The base plate 111 may include a plurality of plates that are friction-stir welded to each other. The base plate 111 may include a plurality of cooling channels, a plurality of cavities, and a rib. Each of the cooling channels, the cavities, and the rib may extend in the X-axis direction. The cooling channels may provide a path for a cooling fluid to flow. The cooling channels may be spaced apart from each other in the Y-axis direction. The cooling channels may be arranged in the Y-axis direction. The plurality of cavities are empty inner spaces of the base plate 111. By forming the plurality of cavities, the mass of the base plate 111 may be reduced, thus improving the energy density of the battery pack 100. The rib may define the plurality of cooling channels and the plurality of cavities. The rib may surround the plurality of cooling channels and the plurality of cavities. The airtightness of the plurality of cooling channels and the plurality of cavities may be maintained due to the rib.

The side walls 112, 113, 114, and 115 may be coupled to the base plate 111. The side walls 112, 113, 114, and 115 may be coupled to the base plate 111 by, for example, friction stir welding.

The side walls 112 and 113 may be substantially perpendicular to the X-axis direction. The side walls 112 and 113 may be spaced apart from each other in the X-axis direction. The side walls 114 and 115 may be substantially perpendicular to the Y-axis direction. The side walls 114 and 115 may be spaced apart from each other in the Y-axis direction.

The plurality of battery cell assemblies 120 may be on the base plate 111 of the housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

For example, the battery pack 100 may be a moduleless type battery pack, and each of the plurality of battery cell assemblies 120 may not include a module frame. As another example, the battery pack 100 may be a module type battery pack, and each of the plurality of battery cell assemblies 120 may not include a module frame.

Each of the plurality of battery cell assemblies 120 may include a plurality of battery cells 121 and side beams 125A and 125B. The side beams 125A and 125B may be coupled to the battery cells 121.

The plurality of battery cells 121 are basic units of a lithium ion battery, i.e., a secondary battery. Each of the plurality of battery cells 121 includes an electrode assembly, an electrolyte, a case, and electrode leads. Each of the plurality of battery cells 121 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

The electrode assembly may include a positive electrode, a negative electrode, and a separator between the positive electrode and the negative electrode. The electrode assembly may be a jelly-roll type electrode assembly or a stack type electrode assembly. The jelly-roll type electrode assembly may include a structure in which a positive electrode, a negative electrode, and a separator interposed therebetween are wound together. The stack type electrode assembly may include a plurality of positive electrodes, a plurality of negative electrodes, and a plurality of separators interposed therebetween that are stacked sequentially.

The electrode lead may be coupled to one of positive electrode tabs of the plurality of positive electrodes and negative electrode tabs of a plurality of negative electrodes. The electrode lead may be welded to one of the positive electrode tabs and the negative electrode tabs. The electrode lead may be an external connection terminal of each of the plurality of battery cells 121.

The plurality of battery cells 121 form a plurality of banks connected to each other in series. Each of the plurality of banks may include one or more battery cells 121 connected in parallel. Each of the plurality of banks may include one or more battery cells connected in parallel. The number of banks connected in series and the number of battery cells connected in parallel may be determined according to a voltage and a current to be output from a stack of the plurality of battery cell assemblies 120.

Each of the plurality of battery cells 121 may further include a lead cover assembly. The lead cover assembly may include a lead cover frame and an integrated circuit. The lead cover frame may include, for example, an insulating material such as plastic. The lead cover frame may cover electrode leads of the plurality of battery cells 121. Accordingly, the lead cover frame may prevent undesired short circuit between the electrode leads of the plurality of battery cells 121 and an external element.

The plurality of battery cells 121 may be arranged in the Y-axis direction. Accordingly, the electrode leads of the plurality of battery cells 121 may be aligned. Separators may be interposed between the plurality of battery cells 121. The separators may be poly urethane (PU) pads for preventing swelling of the plurality of battery cells 121 or separators for thermally separating the battery cells 121.

The side beams 125A and 125B may be spaced apart from each other with the plurality of battery cells 121 interposed therebetween. The side beams 125A and 125B may be spaced apart from each other in the Y-axis direction. The plurality of battery cells 121 may be interposed between the side beams 125A and 125B. The side beams 125A and 125B may be fixed to the plurality of battery cells 121 by an adhesive but embodiments are not limited thereto.

Each of the side beams 125A and 125B may include a coupling surface 125CS and an assembly surface 125AS. The coupling surface 125CS and the assembly surface 125AS may be opposite to each other. The coupling surface 125CS may face the inside of the battery cell assembly 120, and the assembly surface 125AS may face the outside of the battery cell assembly 120.

The coupling surface 125CS of each of the side beams 125A and 125B may face the plurality of battery cells 121. The coupling surface 125CS of each of the side beams 125A and 125B may be in contact with one of the plurality of battery cells 121.

The assembly surface 125AS of each of the side beams 125A and 125B may face a corresponding one among the cross beams 133. The assembly surface 125AS of the side beam 125A of each of the plurality of battery cells 121 may face the assembly surfaces 125AS of the side beams 125B of neighboring battery cells 121 among the plurality of battery cells 121.

The assembly surface 125AS of each of the side beams 125A and 125B may include an inclined surface 125S, a horizontal surface 125H, and a vertical surface 125V. The inclined surface 125S may be oblique to the mounting surface 111U of the base plate 111. The horizontal surface 125H may be substantially parallel to the mounting surface 111U of the base plate 111. The horizontal surface 125H may be connected to the inclined surface 125S. The vertical surface 125V may be substantially perpendicular to the mounting surface 111U of the base plate 111. The vertical surface 125V may be connected to the horizontal surface 125H of the base plate 111.

The inclined surface 125S may face a side surface 133S1 or a side surface 133S2 of a corresponding one among the cross beams 133. The horizontal surface 125H may face an upper surface 133U of a corresponding one among the cross beams 133. The vertical surface 125V of the side beam 125A of each of the plurality of battery cells 121 may face the vertical surface 125V of the side beam 125B of a neighboring battery cell 121 among the plurality of battery cells 121.

The inclined surface 125S may be in contact with a side surface 133S1 or a side surface 133S2 of a corresponding one among the cross beams 133. The horizontal surface 125H may be in contact with an upper surface 133U of a corresponding one among the cross beams 133. The vertical surface 125V of the side beam 125A of each of the plurality of battery cells 121 may be in contact with the vertical surface 125V of the side beam 125B of a neighboring battery cell 121 among the plurality of battery cells 121.

The plurality of battery cell assemblies 120 may be arranged in the X-axis direction and the Y-axis direction. In FIG. 1, the number of battery cell assemblies 120 arranged in the X-axis direction is three, and the number of battery cell assemblies 120 arranged in the Y-axis direction is two. Accordingly, an array of the plurality of battery cell assemblies 120 may be a 3x2 array. Those of ordinary skill in the art will be able to easily derive a plurality of battery cell assemblies 120 arranged in an MxN array (here, M and N are each an integer of 2 or more), based on the above description.

The center beam 131 may be on the base plate 111. The center beam 131 may extend in the X-axis direction. The center beam 131 may be coupled to the base plate 111. The center beam 131 may be welded to the base plate 111. Alternatively, the center beam 131 may be formed integrally with the base plate 111 by an extrusion process and may be included in the base plate 111 in this case.

The center beam 131 may be interposed between the plurality of battery cell assemblies 120. The center beam 131 may isolate the plurality of battery cell assemblies 120 in the Y-axis direction. The plurality of battery cell assemblies 120 may be spaced apart from each other in the Y-axis direction with the center beam 131 interposed therebetween.

The cross beams 133 may be on the base plate 111. The cross beams 133 may extend in the Y-axis direction. The cross beams 133 may be coupled to the base plate 111. The cross beams 133 may be welded to the base plate 111.

The cross beams 133 may be interposed between the plurality of battery cell assemblies 120, isolate an electronic component mounting region EMR and the plurality of battery cell assemblies 120, or be interposed between the side wall 115 and the plurality of battery assemblies 120. The cross beams 133 may isolate the plurality of battery cell assemblies 120 in the X-axis direction. The plurality of battery cell assemblies 120 may be spaced apart from each other in the X-axis direction with the cross beams 133 interposed therebetween.

Each of the cross beams 133 may include side surfaces 133S1 and 133S2, a lower surface 133L, and an upper surface 133U. The lower surface 133L may be in contact with the mounting surface 111U of the base plate 111. The side surfaces 133S1 and 133S2 may be connected to the lower surface 133L. The upper surface 133U may be spaced apart from the lower surface 133L in the Z-axis direction. The upper surface 133U may be connected to the side surfaces 133S1 and 133S2.

A cross section of each of the cross-beams 133 may have a trapezoidal shape. The lower surface 133L and the upper surface 133U may be substantially parallel to the mounting surface 111U of the base plate 111. The side surfaces 133S1 and 133S2 may be oblique to the mounting surface 111U of the base plate 111. A length of the upper surface 133U in the X-axis direction may be different from a length of the lower surface 133L in the X-axis direction. The length of the upper surface 133U in the X-axis direction may be less than the length of the lower surface 133L in the X-axis direction.

According to example embodiments, the side beams 125A and 125B may have a shape complementary to that of the cross beams 133. According to example embodiments, the side beams 125A and 125B may be coupled to the cross beams 133. Accordingly, the side beams 125A and 125B and the cross beams 133 may form a cross beam assembly for isolating neighboring battery cell assemblies 120.

According to example embodiments, the assemblability of the battery cell assemblies 120 may be improved due to the inclination of the side surfaces 133S1 and 133S2 of each of the cross beams 133 and the inclination surfaces 125S of the side beams 125A and 125B. According to example embodiments, even when the battery cells 121 swell due to the use of the battery pack 100, the battery cell assemblies 120 may be easily disassembled from the battery pack 100 due to the inclination of the side surfaces 133S1 and 133S2 of each of the cross beams 133 and the inclined surface 125S2 of the side beams 125A and 125B.

An arrangement of the center beam 131, the cross beams 133, and the plurality of battery cell assemblies 120 illustrated in FIG. 1 is a non-limiting example and thus should not be understood as limiting the technical idea of the present invention in any sense. A battery pack that includes various numbers and arrangements of a center beam, cross-beams, and battery cell assemblies will be easily derived by those of ordinary skill in the art according to the above description.

The lid plate 140 may be coupled to the side walls 112, 113, 114 and 115. The lid plate 140 may cover elements, such as the battery cell assemblies 120 and electronic components, inside the battery pack 100. The lid plate 140 may be fixed to the side walls 112, 113, 114, and 115 by mechanical coupling means such as a fastening member.

The battery pack 100 may further include exhaust devices. The exhaust devices may be coupled to, for example, the side wall 112. The side wall 112 may include exhaust holes, and the exhaust devices may be coupled to the exhaust holes of the side wall 112. Each of the exhaust devices may include a spring or rupture disk. Each of the exhaust devices may be configured to emit a gas from the inside of the battery pack 100 when internal pressure of the battery pack 100 exceeds a threshold.

The exhaust devices may be configured to delay thermal propagation by discharging a high-temperature gas from the inside of the battery pack 100 to the outside when at least one of the plurality of battery cell assemblies 120 is in a thermal runaway state.

Here, the thermal runaway state of the plurality of battery cell assemblies 120 is a state in which a change of temperature of the plurality of battery cell assemblies 120 accelerates the change of temperature, i.e., an uncontrollable positive feedback. The temperature of the plurality of battery cell assemblies 120 that are in a thermal runaway state sharply increase, and a large amount of high-pressure gas and combustion debris are discharged.

The battery pack 100 may further include electronic components. The electronic components may be on the electronic component mounting region EMR of the housing 110. The electronic components may include an electronic device required to drive the battery pack 100.

The electronic components may include, for example, a battery management system (BMS). The BMS may be configured to monitor, balance, and control the battery pack 100. Monitoring of the battery pack 100 may include measuring voltages and currents of certain nodes inside the plurality of battery cell assemblies 120 and measuring temperatures at set positions in the battery pack 100. The battery pack 100 may include measuring instruments for measuring a voltage, a current, and temperature as described above.

Balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and an external load (e.g., a motor of a vehicle), when abnormal voltage such as voltage surges occurs.

The battery pack 100 may further include a plurality of bus bars configured to electrically connect the plurality of battery cell assemblies 120. The plurality of battery cell assemblies 120 may be connected in series by the plurality of bus bars. Accordingly, the battery pack 100 may be configured to output a high voltage to an external load (e.g., a motor of a vehicle).

### (Second Embodiment)

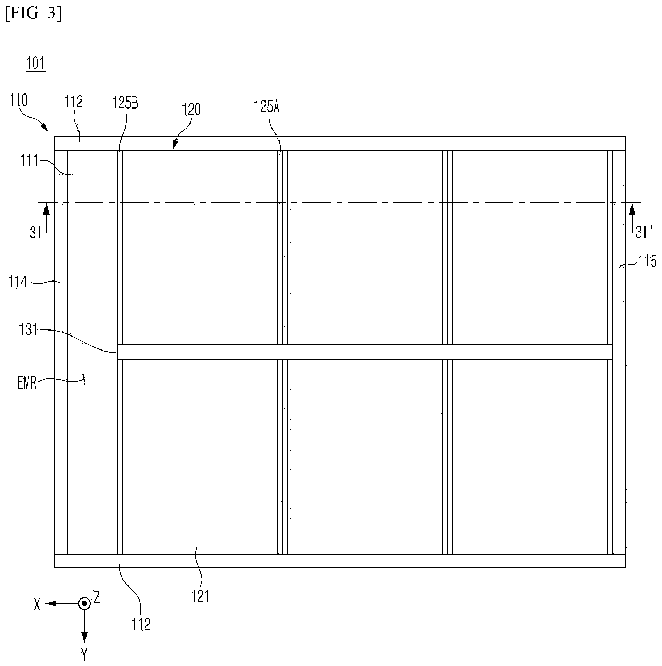

FIG. 3 is a top view of a battery pack 101 according to example embodiments. In FIG. 3, a lid plate 140 is omitted.

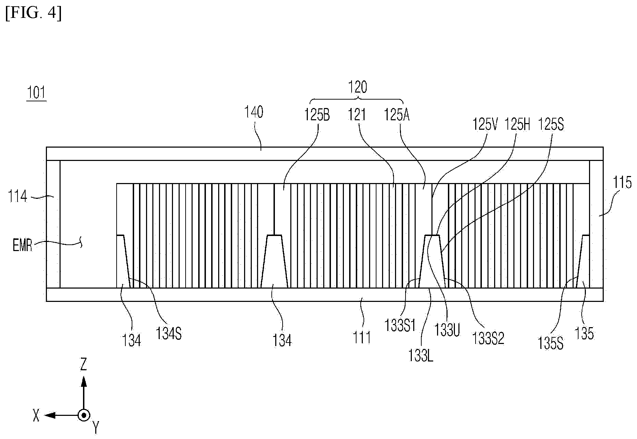

FIG. 4 is a cross-sectional view taken along line 3I-3I' of FIG. 3.

Referring to FIGS. 3 and 4, the battery pack 101 includes a housing 110, a plurality of battery cell assemblies 120, a center beam 131, cross beams 133, cross beams 134 and 135, and the lid plate 140.

The housing 110, the plurality of battery cell assemblies 120, the center beam 131, the cross beams 133, and the lid plate 140 are substantially the same as those described above with reference to FIGS. 1 and 2, and thus a redundant description thereof is omitted here.

The cross beams 134 and 135 may be spaced apart from each other with the cross beams 133 interposed therebetween. The cross beams 133 may be interposed between the cross beams 134 and 135. The cross beam 134 may be adjacent to a side wall 114. The cross beam 135 may be adjacent to a side wall 115. The cross beam 135 may be in contact with the side wall 115.

According to example embodiments, the cross beam 134 may include only one inclined surface 134S, and the cross beam 135 may include only one inclined surface 135S. A length of each of the cross beams 134 and 135 in the X-axis direction may be different from a length of each of the cross beams 133 in the X-axis direction. The length of each of the cross beams 134 and 135 in the X-axis direction may be less than the length of each of the cross beams 133 in the X-axis direction.

According to example embodiments, the cross beam 135 may be coupled to the side beam 125A, and the cross beam 134 may be coupled to the side beam 125B. Accordingly, an overall length of the battery pack 101 may decrease and energy density of the battery pack 101 may improve.

### (Third Embodiment)

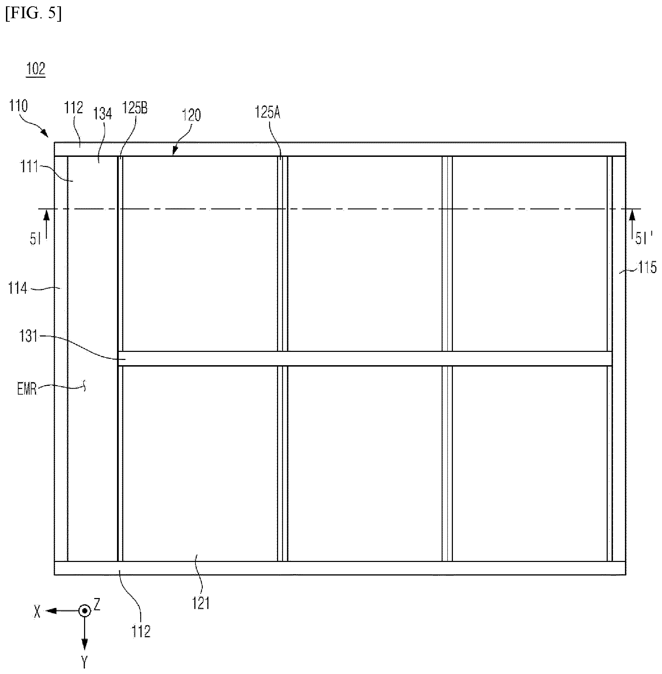

FIG. 5 is a top view of a battery pack 102 according to example embodiments. In FIG. 5, a lid plate 140 is omitted.

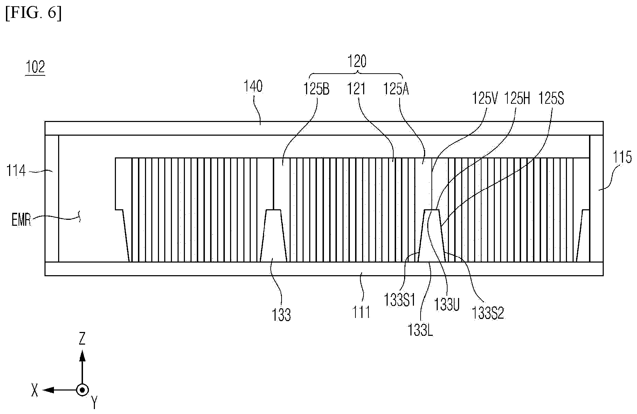

FIG. 6 is a cross-sectional view taken along line 5I-5I' of FIG. 5.

Referring to FIGS. 5 and 6, the battery pack 102 may include a housing 110, a plurality of battery cell assemblies 120, a center beam 131, cross beams 133, and the lid plate 140.

The housing 110, the plurality of battery cell assemblies 120, the center beam 131, the cross beams 133, and the lid plate 140 are substantially the same as those described above with reference to FIGS. 1 and 2, and thus a redundant description thereof is omitted here.

The cross beams 133 may be interposed only between the plurality of battery cell assemblies 120. Accordingly, the number of the cross beams 133 may be less than the number of the battery cell assemblies 120. For example, when the battery pack 102 includes 2N battery cell assemblies 120 (N is an integer of 2 or more), the battery pack 102 may include (2N-2) cross beams 133. Accordingly, an overall length and mass of the battery pack 102 may decrease and energy density of the battery pack 102 may improve.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery pack comprising:
a base plate;
a first battery cell assembly on a mounting surface of the base plate, the first battery cell assembly including a plurality of first battery cells and a first side beam coupled to the plurality of first battery cells;
a second battery cell assembly on the mounting surface of the base plate, the second battery cell assembly including a plurality of second battery cells and a second side beam coupled to the plurality of second battery cells; and
a cross beam between the first battery cell assembly and the second battery cell assembly,
wherein first and second side surfaces of the cross beam are oblique to the mounting surface of the base plate, the first side surface of the cross beam faces the first battery cell assembly, and the second side surface of the cross beam faces the second battery cell assembly.

2. The battery pack of claim 1, wherein the first side beam includes a first inclined surface facing the first side surface of the cross beam, and
the second side beam includes a second inclined surface facing the second side surface of the cross beam.

3. The battery pack of claim 2, wherein the first side beam includes a first horizontal surface parallel to the mounting surface of the base plate and connected to the first inclined surface, and
wherein the second side beam includes a second horizontal surface parallel to the mounting surface of the base plate and connected to the second inclined surface.

4. The battery pack of claim 3, wherein the first side beam includes a first vertical surface vertical to the mounting surface of the base plate and connected to the first horizontal surface, and
wherein the second side beam includes a second vertical surface vertical to the mounting surface of the base plate and connected to the second horizontal surface.

5. The battery pack of claim 4, wherein each of the first and second horizontal surfaces contacts an upper surface of the cross beam, and
wherein the first and second vertical surfaces face each other.

6. The battery pack of claim 5, wherein the cross beam includes a lower surface in contact with the mounting surface of the base plate, and
each of the first and second side surfaces of the cross beam is connected to the lower surface of the cross beam.

7. The battery pack of claim 6, wherein a length of the upper surface of the cross beam in a first direction is different from a length of the lower surface of the cross beam in the first direction,
wherein the first direction is parallel to the mounting surface of the base plate.

8. The battery pack of claim 7, wherein the length of the upper surface of the cross beam in the first direction is less than the length of the lower surface of the cross beam in the first direction.

9. The battery pack of claim 1, wherein the first and second sides are spaced apart from each other in a first direction parallel to the mounting surface of the base plate, and
the plurality of first battery cells are arranged along the first direction.

10. The battery pack of claim 1, wherein a cross section of the cross beam has a trapezoidal shape.

11. A battery pack comprising:
a base plate;
a plurality of battery cell assemblies on a mounting surface of the base plate, wherein each of the plurality of battery cell assemblies includes a plurality of first battery cells and first and second side beams; and
cross beams between the plurality of battery cell assemblies,
wherein a cross section of each of the cross beams has a trapezoidal shape.

12. The battery pack of claim 11, wherein each of the cross beams includes a lower surface in contact with the mounting surface of the base plate, and
wherein each of first and second side surfaces of each of the cross beams is oblique to the mounting surface of the base plate and connected to the lower surface of each of the cross beams.

13. The battery pack of claim 12, wherein a length of an upper surface of each of the cross beams in a first direction is different from a length of the lower surface of each of the cross beams in the first direction,
wherein the first direction is parallel to the mounting surface of the base plate.

14. The battery pack of claim 13, wherein the length of the upper surface of each of the cross beams in the first direction is less than the length of the lower surface of each of the cross beams in the first direction.
